# DEMANDE DE BREVET EUROPEEN

(11) **EP 0 938 022 A1**
(43) Date de publication de la demande: **25.08.1999**
(21) Numéro de dépôt: 98103102.4
(22) Date de dépôt: 23.02.1998
(51) Int. Cl.: G03B 29/00

(54) **Appareil photographique miniature et montre comportant un tel appareil**

(71) Demandeur: The Swatch Group Management Services AG, 2501 Biel (CH)
(72) Inventeur: Nussbaum, Augustin, 2000 Neuchâtel (CH)
(74) Mandataire: Ravenel, Thierry Gérard Louis

(57) **Abrégé**

L'appareil photographique miniature comporte un boîtier (1), un objectif (2) débouchant sur une face frontale de l'appareil, un obturateur, une cassette en forme de disque à l'intérieur de laquelle un film photosensible est monté de manière rotative, un mécanisme à bouton-poussoir (70) pour commander l'obturateur, et un mécanisme d'entraînement pour armer l'obturateur et entraîner le film par pas successifs. De préférence, l'appareil est intégré à une montre-bracelet. Le mécanisme d'entraînement comporte une bague (11) de commande manuelle, par exemple une lunette rotative de la montre, et des moyens de liaison pour relier cinématiquement la bague (11) à la cassette afin d'assurer l'entraînement du film (54). Le même mouvement de la bague arme l'obturateur.

## Description

La présente invention se rapporte à un appareil photographique miniature, par exemple un appareil susceptible d'être porté au bras par un utilisateur. Il comporte un objectif, un obturateur et une cassette amovible en forme de disque à l'intérieur de laquelle un film photosensible est monté de manière rotative. Il comporte en outre un mécanisme de commande de l'obturateur et un mécanisme d'entraînement pour entraîner le film par pas successifs correspondant chacun à une prise de vue.

L'invention concerne aussi une montre comportant un tel appareil, en particulier une montre-bracelet.

Un appareil de ce type est par exemple décrit dans le brevet CH 359 024. Cet appareil est logé dans le boîtier d'une montre-bracelet, la cassette étant montée et positionnée dans une calotte obturant le fond de la montre. Plus précisément, la cassette comporte une partie inférieure, à laquelle le film est attaché, et une partie supérieure rendue solidaire du bâti de la montre. Ces deux parties coopèrent pour définir les positions dans lesquelles le film est aligné par rapport à l'objectif, par un système de friction à cran intercalé entre elles. Après une prise de vue, on entraîne la partie inférieure de la cassette en rotation en faisant tourner manuellement le fond. Cette rotation arme simultanément le mécanisme de commande de l'obturateur.

L'appareil tel que décrit nécessite des précautions particulières lors de son usage. En effet, il est tout d'abord indispensable de le retirer du poignet pour assurer le déplacement du film et pour armer l'obturateur. En outre, la liaison entre le fond et le système d'obturation laisse supposer que rien n'empêche un mouvement de recul du fond, conduisant à son désengagement de l'appareil. Une telle éventualité conduirait à ce que la cassette se détache de manière intempestive lorsque le porteur enlève sa montre. La partie du film se trouvant en regard de l'objectif serait alors inutilisable. De plus, rien n'empêche l'usager d'effectuer plus d'un tour du film. Il pourrait en résulter des doubles expositions.

La présente invention a pour but de réaliser un appareil photographique miniature, d'un usage pratique et sûr, permettant à son utilisateur de le manipuler sans risque de fausse manoeuvre.

L'invention a également pour but de réaliser un appareil de type bracelet, permettant de prendre une succession de photographies sans devoir enlever l'appareil du bras de son porteur.

Un autre but est permettre à tout porteur d'une montre de disposer en outre dans celle-ci d'un appareil photographique d'usage simple, disponible immédiatement, sans augmentation exagérée des dimensions de la montre.

Ces buts sont atteints grâce aux caractéristiques des revendications 1 et 12. Des modes d'exécution particuliers sont définis dans les revendications dépendantes.

L'invention sera mieux comprise à la lecture de la description qui va suivre, donnée à titre d'exemple non limitatif et faite en référence aux dessins, dans lesquels:
- la figure 1 est une vue de dessus d'un appareil selon l'invention, intégré à une montre-bracelet,
- la figure 2 illustre en éclaté les différentes parties de l'appareil de la figure 1,
- la figure 3 est une vue de dessus de l'appareil de la figure 1, duquel ont été retirés les composants se trouvant dans la partie supérieure,
- la figure 4 est une vue de dessous de l'appareil de la figure 1, duquel la cassette a été retirée,
- la figure 5 est une vue en coupe selon la ligne V-V de la figure 3,
- les figures 6 à 8 illustrent en coupe des parties de l'appareil de la figure 1, respectivement selon les lignes VI-VI, VII-VII et VIII-VIII des figures 3 et 4,
- les figures 9 et 10 représentent respectivement en vue de dessus et en coupe une cassette telle qu'utilisée dans l'appareil selon l'invention, et
- les figures 11, 12 et 13 illustrent comment se présente cette cassette vue de dessus, respectivement à l'état vierge, en cours d'exposition et complètement exposée.

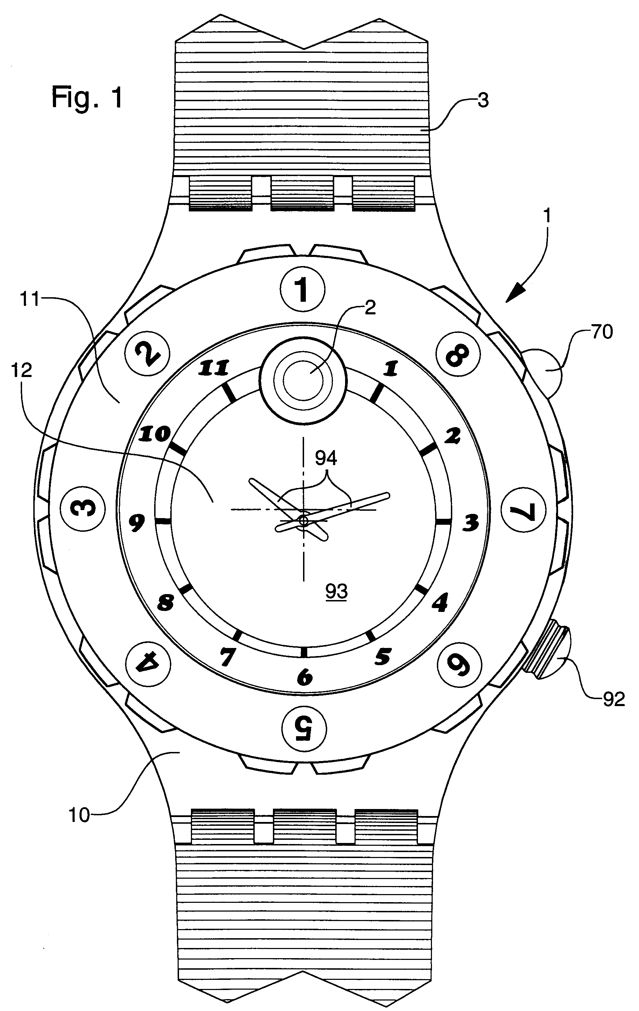

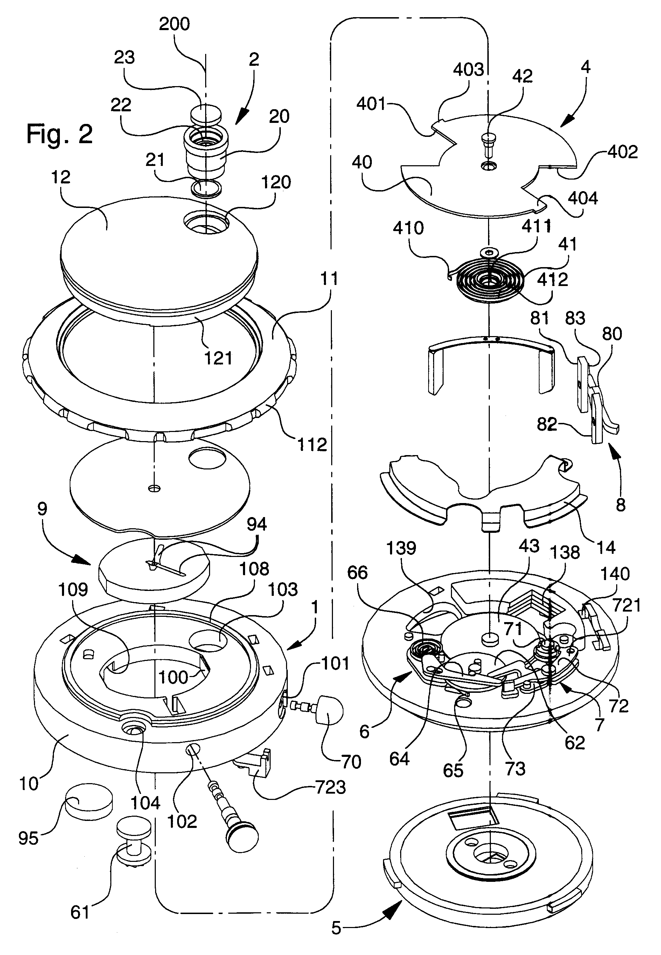

La figure 1 montre, vu de dessus, un boîtier 1 sensiblement circulaire, commun à un appareil photographique et à une pièce d'horlogerie. Un bracelet 3, fixé de manière conventionnelle au boîtier 1, permet l'attache de l'appareil au bras de son utilisateur. Ainsi qu'on peut le voir plus particulièrement sur la figure 2, l'appareil comporte un objectif 2, un obturateur 4, une cassette amovible 5, un mécanisme 6 d'armement, pour armer l'obturateur 4, et d'entraînement, pour faire tourner le film photosensible de la cassette 5, un mécanisme de commande 7 de l'obturateur 4 et un mécanisme de verrouillage 8. Avantageusement, une pièce d'horlogerie 9 peut être montée dans le boîtier 1.

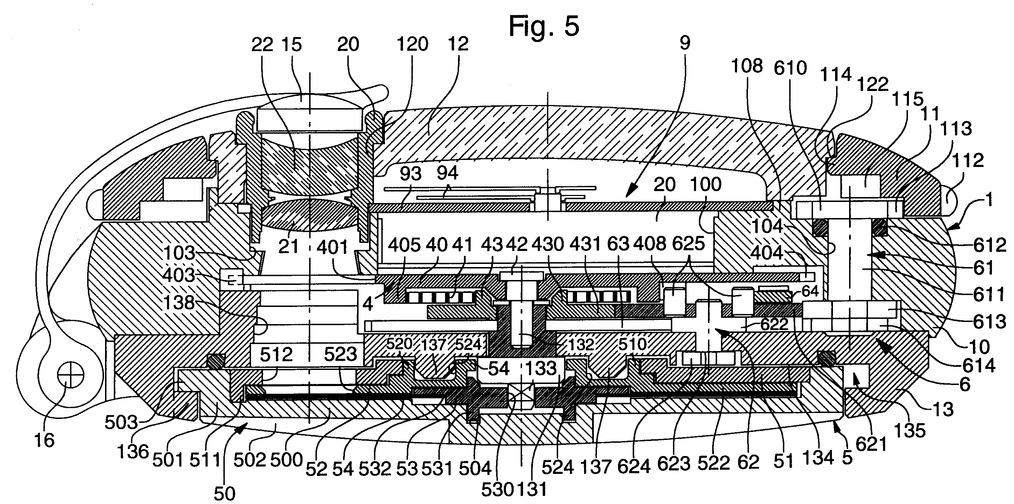

Le boîtier 1, ayant la forme habituelle d'une boîte de montre ronde, comprend un corps en forme de carrure 10 de montre, une bague 11 montée à l'avant de la carrure 10, une plaque frontale transparente 12 servant de glace de montre et un fond 13 servant de platine. En outre, un pont 14 est fixé sur le fond 13 pour assurer la tenue en place et le positionnement de différents composants interposés entre eux. Un bouchon d'objectif 15 (fig. 5) en matériau souple est attaché au boîtier 1 au moyen d'une goupille 16 assurant en outre la fixation du bracelet au boîtier.

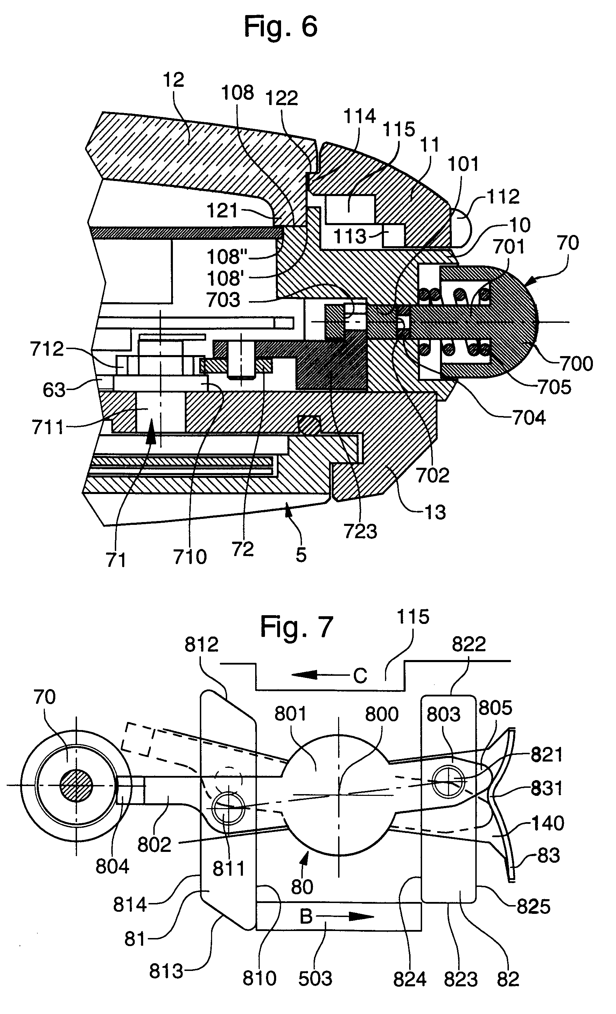

La carrure 10 présente une ouverture centrale 100 (fig. 2) destinée à recevoir la pièce d'horlogerie 9. Elle est percée de deux trous 101 et 102 s'étendant radialement dans l'épaisseur de son flanc. Elle comporte en outre des ouvertures axiales référencées 103 et 104 dont la fonction sera précisée ci-après. La face supérieure comporte un bossage 108 sensiblement annulaire avec deux épaulements 108' et 108'' (fig. 6). Un logement 109 est pratiqué dans sa face inférieure (fig. 2).

La bague 11 est montée mobile en rotation sur la carrure 10 comme une lunette tournante de montre. Elle porte sur sa face supérieure (fig. 1) des index ou les chiffres de 1 à 8, correspondant au numéro de la photographie qui sera prise lors du prochain actionnement l'obturateur. Elle est guidée radialement par la glace 12 (fig. 2 et 5). Elle comporte à sa périphérie une cannelure 112 facilitant sa manipulation. Sa face inférieure comporte une couronne dentée intérieurement 113 (fig. 5 et 6). Le flanc intérieur de la bague 11 est muni d'un anneau saillant 114 et d'un doigt 115 qui occupe une partie de l'espace compris entre la couronne dentée 113 et l'anneau 114.

La glace 12 est réalisée par exemple en verre organique et permet à l'utilisateur de lire l'heure affichée par la pièce d'horlogerie 9. Une ouverture circulaire excentrique 120, pratiquée dans sa partie médiane, est obturée par l'objectif 2. La glace 12 comprend en outre un talon 121 (fig. 6) prenant appui contre l'épaulement 108'. La partie supérieure de la glace 12 se prolonge radialement pour former une portée 122 s'étendant au-dessus de la bague 11 et coopérant avec l'anneau 114 pour retenir axialement la bague 11 en place sur la carrure 10. La glace 12 peut être chassée, soudée ou collée sur la carrure 10.

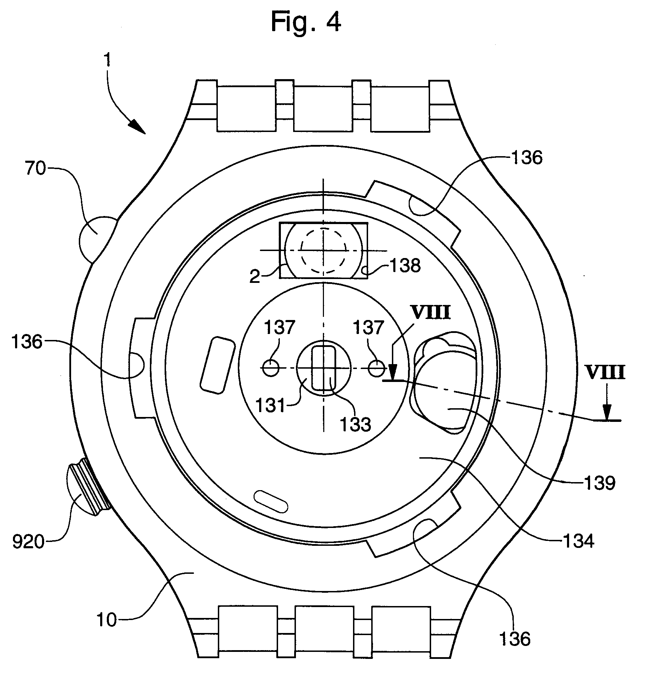

Le fond 13 sert au moins partiellement de support à l'obturateur 4, au mécanisme d'armement 6 et au mécanisme de commande 7. Il est fixé à la carrure 10 par des vis ou par soudage. Le fond 13 comporte en son centre un trou dans lequel un arbre d'entraînement 131 (fig. 4 et 5) est monté pivotant. L'arbre 131 comporte du côté de la glace 12 un taraudage 132 et à l'autre extrémité une tête non circulaire 133, par exemple carrée. Une noyure 134 est pratiquée dans la face inférieure du fond 13. Le fond de cette noyure 134 se prolonge radialement dans son flanc pour définir une gorge 135. Trois découpes 136 réparties à 120° les unes des autres sont pratiquées dans le flanc de la noyure 134. La paroi du fond de la noyure 134 porte deux tétons 137, orientés axialement et diamétralement opposés.

Le fond 13 comporte en outre deux ouvertures 138 et 139 ainsi qu'un dégagement à deux trous rectangulaires à la périphérie, ce dégagement définissant un logement 140 destiné à recevoir le mécanisme de verrouillage 8. Le fond 13 comprend en outre un certain nombre de trous et de tenons, non référencés et destinés à assurer le positionnement et la fonction des différentes pièces des mécanismes qu'il supporte.

L'objectif 2 comprend un tube cylindrique 20 dont l'axe 200 est perpendiculaire au plan du cadran de la montre. Ce tube est de préférence en ABS et porte à l'intérieur la lentille 22. Le bouchon amovible 15 obture le tube à l'avant et protège les lentilles 21 et 22. Le tube 20 est fixé à la plaque frontale 12. Il est engagé dans l'ouverture 103 de la carrure 10 ou du cadran de manière ajustée, pour garantir que de la lumière n'arrive au film qu'au travers de l'objectif 2. Le tube 20 est aligné sur l'ouverture 138 du fond 13. Il est bien évident que l'objectif 2 pourrait comporter un nombre de lentilles plus ou moins élevé que celles représentées, sans pour autant sortir du cadre de l'invention.

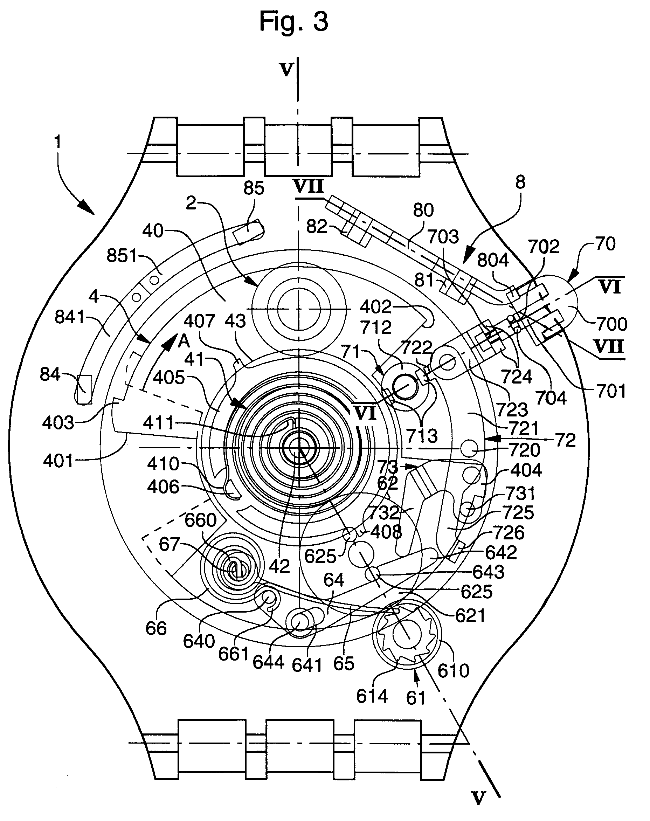

En se référant aux figures 2, 3 et 5, on peut voir que l'obturateur 4 comporte un disque d'obturation 40, un ressort-spiral 41, une vis 42 et une roue dentée d'armement 43. Le disque 40 est librement rotatif sur la vis 42 qui est vissée axialement dans l'extrémité supérieure de l'arbre 131. Le disque 40 comprend deux découpes 401 et 402 pratiquées dans sa périphérie et diamétralement opposées l'une à l'autre. A côté de chacune des découpes, le disque se prolonge radialement pour définir deux doigts 403 et 404 diamétralement opposés. Il comprend en outre sur sa face inférieure (figure 3) un talon annulaire 405 interrompu localement pour former un plot 406 et prolongé radialement vers l'extérieur, définissant deux ergots 407 et 408 diamétralement opposés.

Le ressort-spiral 41 comprend une partie coudée 410 à sa périphérie, et une extrémité intérieure 411 en son centre (figure 3). La partie intermédiaire 412 est bien entendu enroulée en spirale. La partie coudée 410 est engagée entre le plot 406 et le talon annulaire 405, rendant ainsi la partie extérieure du ressort-spiral 41 solidaire du disque 40. L'extrémité intérieure 411 du ressort-spiral 41 est fixée à la roue dentée 43. On notera que les dents des roues dentées ne sont généralement pas représentées ici, afin de clarifier les dessins.

La roue dentée 43 est librement rotative sur l'arbre 131 (figure 5). Elle comporte une première partie 430 formant un collet axial sur lequel le ressort-spiral 41 est fixé et une deuxième partie 431 munie d'une denture et formant la planche de la roue dentée.

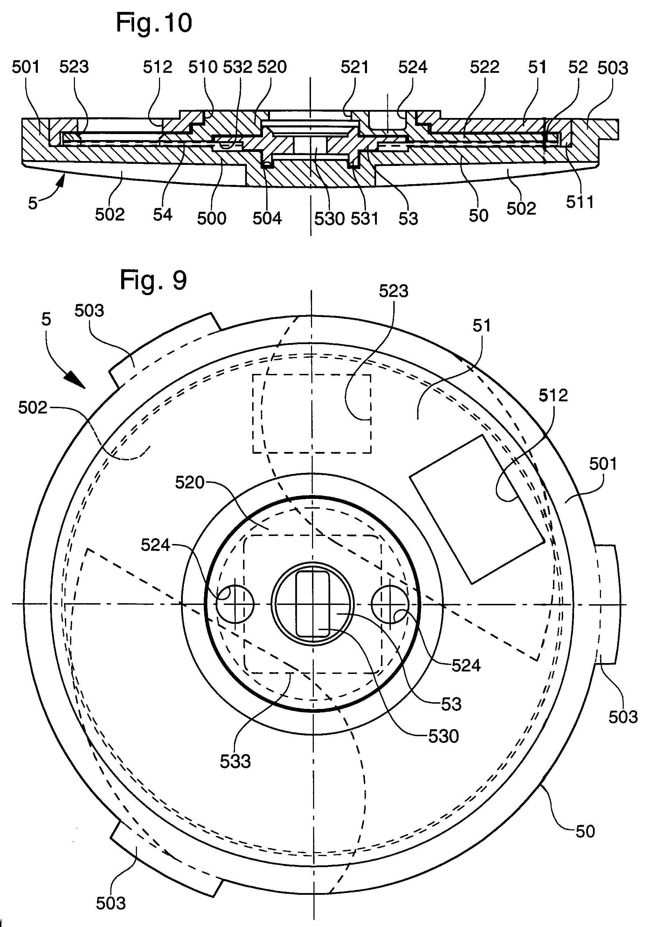

La cassette 5 est plus particulièrement représentée aux figures 9 et 10. Elle comprend un fond 50 en forme d'assiette, un couvercle 51, un cache 52, un disque d'entraînement 53 et un film photosensible 54 lié en rotation au disque 53. Sur la figure 9, le cache se trouve dans la position qu'il occupe lorsque la cassette est vierge, et sur la figure 10 dans la position en cours d'exposition.

Le fond 50 comporte une partie centrale 500, discoïde, et une périphérie 501 annulaire. La partie centrale est munie de cannelures 502 sur sa face inférieure, pour permettre de manipuler plus facilement la cassette. Le flanc externe de la périphérie 501 porte trois doigts 503 s'étendant radialement vers l'extérieur et disposés à 120° les uns des autres. Une gorge 504 est pratiquée dans la partie centrale, du côté intérieur du fond.

Le couvercle 51 présente une forme annulaire avec une ouverture centrale 510. Il comporte à sa périphérie une surépaisseur 511, adjacente au flanc interne de la périphérie 501 du fond 50 pour permettre un emboîtement à force du couvercle dans le fond. Une découpe du couvercle constitue une fenêtre 512 destinée à laisser passer la lumière devant impressionner le film photosensible 54.

Le cache 52 comprend un anneau central 520 définissant un trou circulaire 521 et se prolongeant radialement vers l'extérieur pour former un disque annulaire 522 placé sous le couvercle 51 et qui comporte une découpe 523, de dimensions sensiblement égales à celles de la fenêtre 512. L'anneau central 520 est percé de deux trous borgnes 524 orientés axialement, ouverts vers le dessus de la cassette 5.

Le disque d'entraînement 53 est intercalé entre le fond 50 et le cache 52. Il comprend un trou central 530 de forme rectangulaire, dans lequel est engagé le carré 133 (figure 5) et une bague 531 s'étendant axialement en direction du fond 50 et engagée dans la gorge 504 pour guider en rotation le disque. Le disque 53 présente un décrochement 532 dans sa périphérie, autour d'un carre central 533. Le film photosensible 54 se présente sous forme d'un anneau ayant un trou central non circulaire qui est engagé sur le carré 533 du disque 53.

Le mécanisme d'entraînement et d'armement 6 est décrit en référence aux figures 3 et 5. Dans la figure 3, on a représenté en traits continus la position des éléments juste après une prise de vue et en traits interrompus une position après déclenchement mais avant un nouvel armement.

Le mécanisme 6 comporte un train d'engrenages avec un premier mobile 61 en prise avec la couronne dentée 113 de la bague 11, et un deuxième mobile 62 ainsi qu'une roue 63. Il comporte en outre un sautoir 64, deux ressorts 65 et 66 et un plot de fixation 67 solidaire du fond 13 (fig.3). Le premier mobile 61 est monté dans la carrure 10. Il comprend de haut en bas (fig. 5) une première roue dentée 610, qui engrène avec la couronne dentée 113, un arbre 611, une deuxième roue dentée 613 et une troisième roue 614 à denture asymétrique. L'arbre 611 est engagé dans le trou 104 de la carrure 10. Un joint d'étanchéité 612 est intercalé entre l'arbre 611 et la paroi du trou 104. La partie inférieure de l'arbre 611 porte la seconde roue 613.

Le deuxième mobile 62 est monté pivotant dans le fond 13 (fig. 5). Il comporte un arbre pourvu d'une roue 621 et d'un pignon 622. L'arbre présente dans sa partie inférieure une portée 623 sur laquelle est chassé une bague de retenue 624. Deux goupilles 625, diamétralement opposées, sont fixées à la planche de la roue 621. La roue 621 engrène avec la roue 613 du mobile 61 et avec la roue 43 de l'obturateur.

La roue 63 est solidaire en rotation de l'arbre 131. Elle engrène avec le pignon 622 et assure, par l'arbre 131, le déplacement du film photosensible 54.

Comme le nombre de vues prévu sur le film est égal à huit dans cet exemple, le train d'engrenages est nombré de manière que, pour une rotation de 1/8 de tour de la bague 11, le mobile 61 effectue une rotation d'un tour complet, la roue 43 et le mobile 62 font 1/2 tour et la roue 63 fait 1/8 de tour.

Le sautoir 64 comporte un plot 640, une ouverture oblongue 641 et un bec 642 définissant une surface d'appui 643 en forme de crochet (fig. 3). Un pied 644, engagé dans l'ouverture oblongue 641, est chassé dans le fond 13. Le bec 642 coopère avec les deux goupilles 625 d'une manière qui sera précisée ultérieurement.

Les ressorts 65 et 66 sont fixés au fond 13 au moyen du plot de fixation 67. L'extrémité libre du ressort 65 est engagée dans la denture asymétrique de la roue 614, définissant avec elle un encliquetage qui n'autorise un mouvement du mobile 61, et donc de l'anneau 11, que dans le sens horaire. On pourrait toutefois choisir de faire tourner l'anneau 11 seulement dans le sens anti-horaire, en interposant une roue dentée de renvoi entre lui et la roue 610.

Le ressort 66 est de type spiral. Sa partie intérieure comporte un crochet 660 fixé dans le plot 67, par collage ou soudage. L'extrémité extérieure est formée en une boucle 661, accrochée au plot 640. Le ressort 66 est armé de manière à exercer une force sensiblement parallèle à l'orientation de l'ouverture 641 et génère un couple tendant à maintenir en contact la surface d'appui 643 définie par le bec 642 contre la goupille 625.

Ainsi qu'on peut le voir plus particulièrement sur les figures 2, 3 et 6, le mécanisme de commande 7 comporte un bouton-poussoir 70, un mobile rotatif 71 et deux bascules 72 et 73. Le poussoir 70 est monté coulissant de manière connue dans la carrure 10 et engagé dans le trou radial 101. Il est muni d'une tête 700 et d'une tige 701 logée dans la carrure 10. Deux gorges 702 et 703 sont pratiquées dans la tige 701. La gorge 702 positionne un joint d'étanchéité 704 qui coopère avec la paroi du trou de la carrure pour éviter la pénétration des corps étrangers à l'intérieur du boîtier. Un ressort à boudin 705 (fig. 6) est intercalé entre la carrure 10 et la tête 700 et tend à repousser le poussoir 70 vers l'extérieur de la carrure 10.

Le mobile 71 est monté pivotant dans le fond 13. Il comporte une roue 710, un pivot 711 et une came 712, fixés rigidement les uns aux autres. La roue 710 engrène avec la roue 63. Elle est nombrée de manière qu'elle effectue 1/2 tour à chaque fois que le mobile 61 effectue un tour complet. La came 712 présente deux découpes 713 diamétralement opposées (fig. 3).

La bascule 72 est montée pivotante sur un tenon 720 du fond 13. Elle comporte un premier bras 721 s'étendant au-dessus du fond 13 jusqu'à un axe passant par le centre du mobile 71 et par le poussoir 70. Ce bras 721 est muni d'un doigt 722 de forme complémentaire aux découpes 713, sensiblement aligné sur l'axe mentionné ci-dessus. Il porte en outre une bielle 723 dont l'axe de pivotement croise sensiblement l'axe mentionné ci-dessus. A son extrémité libre, la bielle 723 présente deux pliages 724 en forme de doigts, engagés dans la gorge 703 du poussoir 70, pour solidariser ce dernier avec la bascule 72. Celle-ci comporte un second bras 725 s'étendant en opposition au bras 721 et dont l'extrémité libre est munie d'un pliage 726 se trouvant à la hauteur de l'obturateur 40, au voisinage de sa périphérie.

La bascule 73 est montée pivotante dans la carrure 10, au-dessous de la bascule 72. Elle comporte un plot 731, placé à la hauteur de la bascule 72 et agencé pour coopérer avec un flanc du bras 725, ainsi qu'un doigt 732 prenant appui contre le bec 642. Les pièces du mécanisme d'armement 6 et du mécanisme de commande 7 qui sont montées sur le fond 13 sont maintenues en place par le pont 14 (fig. 2).

Le mécanisme de verrouillage 8 a pour fonction essentielle de verrouiller et de déverrouiller certains composants de l'appareil, comme cela sera expliqué ultérieurement. Ainsi qu'on peut le voir plus particulièrement sur les figures 2 et 7, il comporte une bascule 80, une came coulissante 81 à plans inclinés, une butée coulissante 82 et un ressort 83.

La bascule 80 est montée pivotante dans le logement 140, selon un axe 800 orienté radialement dans la carrure 10 (fig. 7). Sa partie médiane circulaire 801, au centre de laquelle passe l'axe 800, porte deux bras diamétralement opposés 802 et 803. Le bras 802 se prolonge à son extrémité libre 804 jusqu'au voisinage du bouton-poussoir 70. Le bras 803 comporte à son extrémité libre un nez 805.

La came 81 est montée pivotante au moyen d'un tenon 811 traversant et rivé sur le bras 802. De même, la butée 82 est montée pivotante au moyen d'un tenon 821, traversant et rivé au bras 803. La came 81 a une forme générale en parallélogramme, avec une grande base 810 située du côté de l'axe 800, une petite base 814, et deux côtés opposés 812 et 813 formant plans inclinés et aboutissant l'un au voisinage de la bague 11, sensiblement à la hauteur du doigt 115, l'autre à la hauteur de la gorge 135 que comporte le fond 13. On notera qu'au lieu d'être coulissante, la came 81 pourrait par exemple être solidaire de la bascule 80.

La butée 82 est de forme générale rectangulaire avec des petits côtés 822 et 823 se trouvant l'un plus bas que le doigt 115, l'autre dans la région de la gorge 135. Le grand côté le plus proche de l'axe 800 porte la référence 824, l'autre la référence 825.

Le ressort 83 est réalisé au moyen d'un fil méplat plié et comporte deux extrémités engagées dans le logement 140 et positionné par les parois de ce logement. Il est muni d'un bossage 831 destiné à coopérer avec le nez 805.

En outre, deux cliquets 84 et 85 munis de ressorts respectifs 841 et 851 (fig. 1) sont disposés dans le boîtier 1 pour prévenir une rotation rétrograde de la cassette 5 quand elle n'est pas empêchée par le mécanisme de verrouillage 8. Ces cliquets coopèrent avec l'un des doigts 503 de la cassette dans la gorge 135 du boîtier.

Ainsi qu'on peut le voir sur les figures 1, 2 et 5, la pièce d'horlogerie 9 comporte notamment un mouvement à quartz 90, une tige de mise à l'heure 92, un cadran 93 et des aiguilles 94 ainsi qu'une pile 95. Le mouvement 90 est logé dans l'ouverture 100 de la carrure 10. Il pourrait s'agir aussi d'un mouvement mécanique. Le cadran 93 est solidaire du mouvement 90 et positionné dans la carrure 10 par l'épaulement 108''.

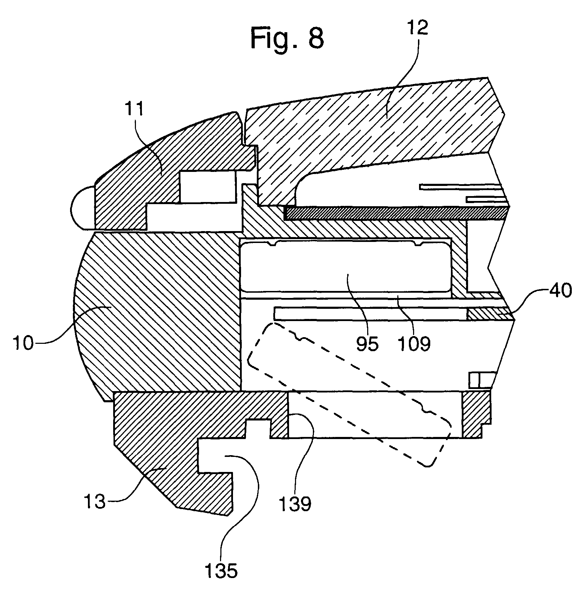

Dans les constructions habituelles, la pile est intégrée au mouvement de la montre. On comprendra aisément qu'une telle solution ne soit pas avantageuse dans l'appareil selon l'invention, car elle nécessiterait d'extraire le mouvement pour pouvoir remplacer la pile. En effet, on constate que le disque 40 de l'obturateur 4 s'étend radialement vers la périphérie bien au-delà du mouvement 90. Ainsi qu'on peut le voir sur les figures 2 et 8, la pile 95 est engagée dans le logement 109 de la carrure 10, qui se trouve dans le prolongement du trou 139 du fond 13. Le logement 109 et le trou 139 sont alignés sur les découpes 401 ou 402. De la sorte, la pile 95 peut être mise en place ou retirée facilement lorsque la cassette 5 est enlevée.

Dans l'exemple décrit, le mouvement d'horlogerie n'est pas directement impliqué dans le fonctionnement de l'appareil photographique. Toutefois, il n'est pas exclu de prévoir un fonctionnement combiné, par exemple utilisant des circuits électroniques de la montre pour commander des fonctions de l'appareil photographique.

Pour bien comprendre le fonctionnement de l'appareil, on commencera par décrire la position des différents composants alors que la cassette a été retirée. Il sera ensuite montré ce qui se passe lors de la mise en place de la cassette, lors de la prise de vue, puis au moment ou, la dernière photo ayant été prise, la cassette doit être retirée.

Lorsque l'appareil ne contient pas de cassette, ses différentes parties sont positionnées comme suit. Le boîtier 1 ne comporte qu'une pièce mobile, soit la bague 11. La position qu'elle occupe est représentée à la figure 1. Le chiffre "1" qu'elle porte sur sa face supérieure, est aligné sur l'objectif 2. Ceci indique que la première zone photosensible du film pourrait être exposée si l'appareil était muni d'une cassette. La bague 11 est empêchée de tourner dans le sens anti-horaire en toutes circonstances, à cause du ressort 65 qui coopère avec la denture de la roue 614. Dans le sens horaire, elle est empêchée de tourner par l'action du sautoir 64 (figure 3) entre les opérations d'armement et de prise de vue.

La bascule 80 est dans une position dite d'arrêt, représentée en traits continus à la figure 8. En outre, le bras 802 se trouve à la hauteur du poussoir 70, son extrémité 804 étant intercalée entre la tête 700 et la carrure 10. De la sorte, il n'est pas possible d'actionner le mécanisme de commande 7. En d'autres termes, ni la bague 11 ni le poussoir 70 ne peuvent être actionnés avant qu'une cassette soit mise en place. On notera qu'à ce stade le doigt 115 de la bague 11 ne se trouve pas dans la zone représentée dans la figure 7, mais plus loin vers la gauche.

Pour mettre une cassette en place, on glisse ses trois doigts 503 chacun dans l'une des découpes 136 du fond 13, la cassette étant positionnée de façon que les tétons 137 du fond 13 pénètrent dans les trous 524 du cache 52. Le cliquet 85 (fig. 1) empêche que la cassette tourne dans le sens rétrograde quand ses doigts se trouvent dans les découpes 136, aussi bien lors de l'entrée que lors de la sortie de la cassette. On fait ensuite pivoter la cassette 5, de sorte que les doigts 503 s'engagent dans la gorge 135 du fond 13, pour fixer la cassette par un système à baïonnette. Le cache 52 par contre reste fixe par rapport au fond 13, à cause des deux tétons 137 qui l'immobilisent.

De la sorte, en fin de rotation, la découpe 523 du cache 52 et la fenêtre 512 du couvercle 51 sont alignées. En outre, l'un des doigts 503 glisse sur le plan incliné 813 de la came 81 et fait monter celle-ci. La bascule 80 pivote alors et son nez 805 glisse sur le ressort 83 et passe de l'autre côté du bossage 831 jusqu'à la position dite de fonctionnement, dessinée en traits interrompus à la figure 8. La butée 82 s'engage dans la gorge 135. Le doigt 503 qui avait soulevé le plan incliné 813 vient alors se positionner contre la butée 82, en prenant appui contre le côté 824. Le cliquet 84 (fig. 1) retient alors un autre des doigts 503 pour empêcher que la cassette tourne en arrière. En se déplaçant, la bascule 80 libère en outre la tête 700, de sorte que le poussoir 70 peut être poussé pour actionner le mécanisme de commande 7.

L'appareil est ainsi prêt pour une prise de vue. En effet, le mécanisme d'armement 6 est armé, à cause de la manipulation qui a été effectuée après que la dernière photo a été prise. Ce processus sera décrit plus en détail ultérieurement.

Lorsque l'appareil est armé, l'un des doigts 403 ou 404 est en appui contre le pliage 726. Pour effectuer une prise de vue, et après que l'appareil a été orienté vers l'objet à photographier, l'opérateur presse sur le bouton-poussoir 70. Celui-ci s'enfonce dans la carrure 10 et entraîne la bascule 72.

Le mobile 71 est positionné de manière que le doigt 722 de la bascule 72 puisse pénétrer dans l'une des découpes 713. Le mouvement vers l'extérieur du bras 725 de la bascule 72 libère le doigt 403 ou 404 de l'obturateur 4. Le disque 40 se met alors en mouvement dans le sens de la flèche A de la figure 3, sous l'effet du couple engendré par le ressort-spiral 41. La découpe 401 balaye l'espace situé dans le prolongement de l'objectif et permet à la lumière de passer pendant un court instant, pour impressionner le film photosensible, dans la zone se trouvant en regard de la fenêtre 512. Le disque 40 poursuit sa course jusqu'à ce que l'un des ergots 407, 408 vienne buter contre l'une des goupilles 625. L'inertie du train d'engrenages du mécanisme d'armement 6 est suffisante pour que le mobile 62 reste immobile malgré le choc.

Dans son mouvement, la bascule 72 entraîne en outre la bascule 73 par son bras 725 qui pousse le plot 731. Le doigt 732 de la bascule 73 soulève alors le sautoir 64. Ce dernier recule sous l'effet du ressort 66, la goupille 625 étant en contact non plus avec la surface d'appui 643, mais contre le bec 642.

En interrompant sa pression sur le poussoir 70, l'opérateur laisse celui-ci reprendre sa position de repos sous l'action du ressort 705. La bascule 72 suit également ce mouvement. Le doigt 722 quitte alors la découpe 713.

Pour faire tourner le film, afin d'amener une nouvelle zone photosensible en regard de l'objectif, et armer le mécanisme d'armement 6, l'opérateur entraîne la bague 11 de 1/8 de tour dans un mouvement de rotation dans le sens horaire. La bague 11 fait tourner le mobile 61 qui lui-même engrène avec le mobile 62, ce dernier étant en prise avec la roue 63. Comme la roue 63 est solidaire de l'arbre 131, celui-ci tourne également, dans le même sens et du même angle que la bague 11. L'arbre 131 entraîne alors le disque d'entraînement 53 et avec lui le film photosensible 54. La roue 621 du mobile 62 fait 1/2 tour et entraîne également sur un 1/2 tour la roue dentée 43, laquelle arme le ressort spiral 41. Les goupilles 625 libèrent ainsi le disque 40 de l'obturateur 4. Ce dernier tourne jusqu'à ce que l'un des doigts 403 ou 404 vienne buter contre le pliage 726.

En fin de rotation, l'une des goupilles 625 vient prendre appui contre la surface d'appui 643, fait avancer le sautoir 64 et arme le ressort 66. Lorsque le sautoir 64 s'est déplacé de manière que la paroi du trou oblong 641 vienne buter contre le pied 644, la bague 11 est alors arrêtée dans son mouvement et l'appareil est armé pour réaliser une nouvelle prise de vue. Dans cette position, l'un des chiffres portés par la bague se trouve en regard de l'objectif 2, qui sert ainsi d'index. On relèvera que si l'opérateur ne va pas au bout de la rotation, il ne pourra pas déclencher le dispositif tant qu'il n'a pas terminé la manoeuvre. En effet, le mobile 71, qui est entraîné par la roue 63, sera dans une position telle que le doigt 722 ne pourra pas pénétrer dans la découpe 713 et en conséquence, la bascule 72 ne pourra pas fonctionner.

Pour vérifier que le mécanisme d'armement est armé, il suffit à l'opérateur d'essayer de faire tourner la bague 11. Si celle-ci peut être tournée, le mécanisme 6 n'était pas armé. Le mouvement de rotation réalisé permet alors de préparer l'appareil pour une nouvelle prise de vue.

Lorsque la dernière photo de la cassette a été prise, l'opérateur tourne une nouvelle fois la bague 11 comme cela a été expliqué plus haut, pour amener le chiffre 1 en regard de l'objectif 2. Le doigt 115 vient glisser sur le plan incliné 812 de la came 81 dans le sens de la flèche C de la figure 7, ce qui remet la bascule 80 dans sa position d'arrêt. Le nez 805 passe alors dans son autre position stable, représentée en traits continus dans la figure 8. Le doigt 503 de la cassette 5 est libéré dans le sens de la flèche B et l'opérateur peut tourner la cassette 5 pour l'extraire de l'appareil. Lors de cette opération, le cache 52 est immobilisé par les tétons 137 et va masquer la découpe 512 du couvercle, fermant ainsi totalement la cassette 5.

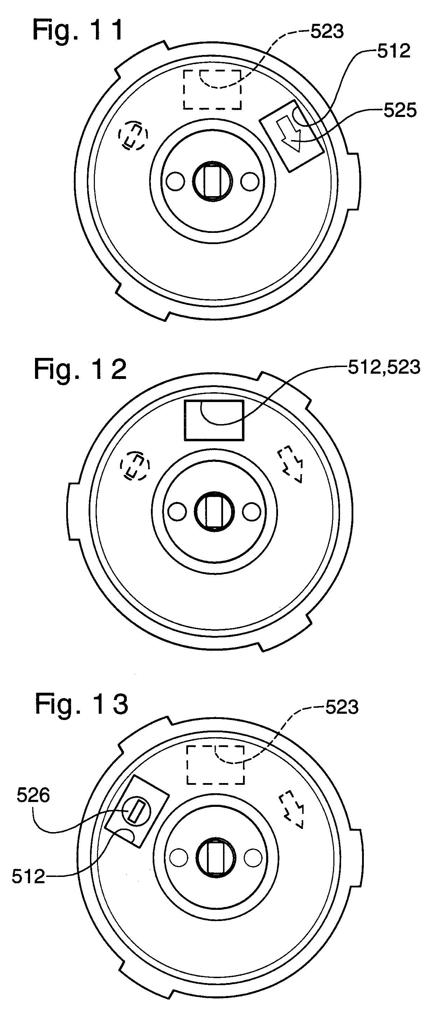

On peut noter qu'au cours des différentes opérations, tant la bague 11 que la cassette 5 sont toujours tournées dans le même sens de rotation. La manipulation en est ainsi considérablement simplifiée. Ainsi qu'on peut le voir dans les figures 11 et 13, et du fait que le cache 52 occupe deux positions différentes avant et après exposition, il est très simple de distinguer une cassette vierge d'une cassette usagée, en faisant apparaître dans la fenêtre 512 un signe distinctif apposé sur le cache 52. Par exemple. Une flèche 525 est ainsi visible sur la cassette 5 de la figure 11, indiquant que le film n'a pas été exposé. Sur la figure 13, un cercle barré 526 indique que la cassette est usagée, le film ayant été entièrement exposé parce qu'il a fait un tour complet. La figure 12 représente la cassette en cours d'exposition, où la découpe 523 du cache se trouve en face de la fenêtre 512. L'opérateur ne voit jamais cette face de la cassette dans cet état.

Bien que l'exemple décrit ci-dessus concerne un appareil photographique miniature incorporé à une montre-bracelet, on conçoit que les principes constructifs et fonctionnels présentés sont aussi utilisables dans un appareil dépourvu de pièce d'horlogerie. Cependant l'incorporation à une montre offre deux avantages importants : d'une part, le porteur de la montre a son appareil photographique en permanence sur lui, prêt à fonctionner, et d'autre part l'appareil est très discret, son aspect extérieur n'étant guère différent de celui d'une montre ordinaire.

## Revendications

1. Appareil photographique miniature comportant un boîtier (1), un objectif (2), un obturateur (4), une cassette amovible (5) en forme de disque à l'intérieur de laquelle un film photosensible (54) est monté de manière rotative, un mécanisme de commande (7) de l'obturateur (4) et un mécanisme (6) d'entraînement pour entraîner le film (54) par pas successifs correspondant chacun à une prise de vue, ledit boîtier (1) comportant dans sa partie médiane un corps (10, 13) destiné à porter et à protéger au moins une partie des composants desdits mécanismes (6, 7), et à l'avant une partie frontale (12) définissant un passage (120) pour l'objectif (2), et dans lequel la cassette (5) est montée à l'arrière du boîtier (1), caractérisé en ce que le mécanisme (6) d'entraînement du film comporte une bague (11) de commande manuelle, mobile en rotation, portée par ledit corps (10) et entourant la partie frontale (12), et des moyens de liaison (61, 62, 63) pour relier cinématiquement ladite bague (11) à la cassette (5) afin d'assurer l'entraînement dudit film (54).

2. Appareil selon la revendication 1, caractérisé en ce que le mécanisme (6) d'entraînement du film assure en outre l'armement de l'obturateur (4) pendant l'entraînement du film.

3. Appareil selon la revendication 2, caractérisé en ce que l'obturateur (4) comporte une roue d'armement (43), en ce que le mécanisme d'entraînement (6) comporte un arbre d'entraînement (131) ayant une tête (133) engagée dans la cassette pour entraîner en rotation le film (54), et en ce que lesdits moyens de liaisons comportent un train d'engrenages (61, 62, 63) agencé pour entraîner simultanément l'arbre d'entraînement (131) et la roue d'armement (43) avec des rapports de transmission différents.

4. Appareil selon la revendication 3, caractérisé en ce que ledit train d'engrenages comporte un premier mobile (61) qui est en prise avec une denture (113) de la bague de commande (11) et un deuxième mobile (62) entraîné par le premier et entraînant l'arbre d'entraînement (131) et la roue d'armement (43), et en ce que le mécanisme d'entraînement (6) comporte en outre des moyens d'arrêt (64, 66, 625) agencés pour arrêter la rotation du deuxième mobile (62) à la fin d'un pas d'entraînement du film.

5. Appareil selon la revendication 4, caractérisé en ce que l'obturateur (4) comporte un disque d'obturation rotatif (40) ayant au moins un ergot (407, 408) agencé pour buter contre les moyens d'arrêt (625) pour arrêter la rotation du disque (40) après une prise de vue.

6. Appareil selon la revendication 1 ou 2, caractérisé en ce que le mécanisme d'entraînement (6) comporte en outre un encliquetage (65, 614) empêchant un mouvement rétrograde de la bague de commande (11).

7. Appareil selon la revendication 6, caractérisé en ce qu'il comporte en outre un mécanisme de verrouillage (8) coopérant avec le mécanisme d'entraînement (6) et agencé pour empêcher l'entraînement du film (54) au-delà d'un tour.

8. Appareil selon la revendication 7, caractérisé en ce que le mécanisme de verrouillage (8) comporte une butée (82) coopérant avec la bague de commande (11) et empêchant sa rotation après que le film (54) a effectué un tour complet dans la cassette (5).

9. Appareil selon l'une des revendications 6 à 8, caractérisé en ce que le mécanisme d'entraînement (6) est agencé de façon que le film (54) effectue un tour dans la cassette (5) pour un tour de la bague de commande (11) et en ce que la bague de commande (11) présente des index ou numéros, régulièrement répartis, correspondant à des photographies successives sur le film.

10. Appareil selon l'une des revendications précédentes, caractérisé en ce qu'il comporte en outre un bracelet (3) rattaché au boîtier (1) pour permettre de fixer l'appareil au bras d'un utilisateur.

11. Appareil selon la revendication 10, caractérisé en ce qu'il comporte un bouchon d'objectif (15) rattaché à des moyens d'attache (16) qui permettent en outre de fixer le bracelet (3) au boîtier (1).

12. Montre comportant un appareil photographique selon l'une des revendications précédentes, caractérisée en ce que ledit boîtier (1) est commun à l'appareil photographique et à la montre.

13. Montre selon la revendication 12, caractérisée en ce que ladite partie frontale (12) est en matériau transparent et recouvre des organes d'affichage du temps (93, 94).

14. Montre selon la revendication 12, caractérisée en ce que la bague de commande (11) est une lunette tournante et en ce que le film (54) effectue un tour dans la cassette (5) pour un tour de la lunette.
